Europäisches Patentamt

(19) **European Patent Office**

**Office européen des brevets**

(11) Numéro de publication: **0 108 007**
**B1**

(12) **FASCICULE DE BREVET EUROPEEN**

(45) Date de publication du fascicule du brevet: **18.01.89**

(51) Int. Cl.⁴: **A 23 N 17/00, B 01 F 15/04**

(21) Numéro de dépôt: **83402031.5**

(22) Date de dépôt: **19.10.83**

(54) Appareillage destiné à la fabrication d'aliments pour bétail.

(30) Priorité: **28.10.82 FR 8218109**

(43) Date de publication de la demande:
**09.05.84 Bulletin 84/19**

(45) Mention de la délivrance du brevet:
**18.01.89 Bulletin 89/03**

(84) Etats contractants désignés:
**BE DE FR GB IT NL**

(56) Documents cités:
**DE-A-3 034 219**
**DE-B-1 093 178**
**DE-C-1 632 878**
**GB-A- 456 852**

(73) Titulaire: **COMIA F.A.O. S.A. Société Anonyme dite:**
**27, Boulevard de Chateaubriant**
**F-35500 Vitre (FR)**

(72) Inventeur: **Ghys, Claude**
**La Vallerais**
**F-35500 Balaze (FR)**
Inventeur: **Bourriau, Bernard**
**Marais de Guénault**
**F-35500 Vitre (FR)**

(74) Mandataire: **Jolly, Jean-Pierre et al**
**Cabinet BROT et JOLLY 83, rue d'Amsterdam**
**F-75008 Paris (FR)**

Courier Press, Leamington Spa, England.

## Description

La présente invention concerne un appareillage destiné à la fabrication d'aliments pour bétail composés d'un mélange d'au moins un produit nutrutif tel que par exemple, des céréales broyées et d'au moins une matière additive telle qu'un complément minéral vitaminé, généralement appelé CMV.

D'une manière générale, on sait que la fabrication à la ferme de ce type d'aliment nécessite la mise en place d'un certain nombre de matériels pouvant réaliser les différentes phases du processus, à savoir, le broyage, le dosage et le mélange, matériels auxquels il faut rajouter des moyens de stockage et de manutention amont/aval qui ne se trouvent pas concernés par l'invention.

Cette fabrication se fait en général par lot et de nuit afin de pouvoir notamment profiter du tarif électrique réduit.

Or, l'incorporation du complément minéral vitaminé (CMV) nécessite normalement la présence d'un opérateur.

On ne peut donc réaliser qu'un seul lot par nuit et cette quantité doit correspndre au besoin journalier en aliment de l'exploitation. Ainsi, selon la taille des exploitations, il sera nécessaire de prévoir toute une gamme de matériels de capacité différente. Cette solution présente donc, pour le constructeur, l'inconvénient de ne pas bénéficier de l'état de série, et de ne jamais avoir en stock le matériel requis, et, pour l'exploitant, l'inconvénient de devoir changer le matériel lors de l'évolution de l'élevage ou, en cas de gros besoin, d'avoir à réaliser un investissement important, eu égard à l'importance du lot et du matériel.

DE—A—3034219 décrit certes une machine de conditionnement de fourrange comprenant un réservoir à fourrage, un broyeur et un mélangeur du fourrage broyé, mais cette machine ne comporte pas de moyens d'introduction d'une matière additive telle que du CMV.

GB—A—456 852 concerne un dispositif pour le mélange des céréales, qui comprend un pré-mélangeur alimenté à partir de cases, un second système de mélange à vis ou à palettes et un moyen d'ensachage des grains et céréales.

La présente invention vise à proposer un appareillage pour la préparation par lots, de façon répétitive et automatique, d'aliments pour bétail comprenant une matière nutritive d'addition, et ce au moyen d'un appareillage de dimension plus réduite.

A cet affet, l'invention a pour objet un appareillage dstiné à la fabrication d'aliments pour bétail, comprenant:

— Un mélangeur d'un type connu en soi;

— Des moyens d'alimentation permettant d'introduire à l'intérieur du mélangeur après passage dans un broyeur des quantités déterminées des produits de base de l'aliment, tels que des céréales;

— Des moyens d'extraction permettant l'évacuation du produit fini à la sortie du mélangeur;

— Un autmatisme pour la commande du mélangeur ainsi que des moyens d'alimentation, cet automatisme étant conçu de mainère à pouvoir piloter un nombre prédéterminé de cycles de fabriction consécutifs, et

— Un doseur de produit comprenant une sére de cases ayant des orifices de sorite, chacun équipé d'un obturateur commandé individuellement par ledit automatisme;

Cet appareillage étant caractérisé en ce que les moyens d'alimentation (1, 2) sont conformés pour introduire des céréales broyés, tandis que la série de cases, dans chacune desquelles on peut disposer préalablement une quantité de matière additive telle que du CMV, nécessaire à chaque cycle, est disposée de tolle façon que chacune de ces cases, attenante au mélangeur, a son orifice de sortie que débouche dans le mélangeur.

Selon une caractéristique de l'invention, les susdites cases sont disposées le long d'au moins l'une des parois du mélangeur. Par ailleurs, chaque case communique, dans sa partie inférieur, avec le volume intérieur du mélangeur, par l'intermédiaire d'une trappe dont l'ouverture est commandée par un électro-aimant ou analogue connecté au sudit automatisme.

Un mode de réalisation de l'invention sera décrit ci-après, à titre d'exemple non limitatif, avec référence aux dessins annexés dans lesquels;

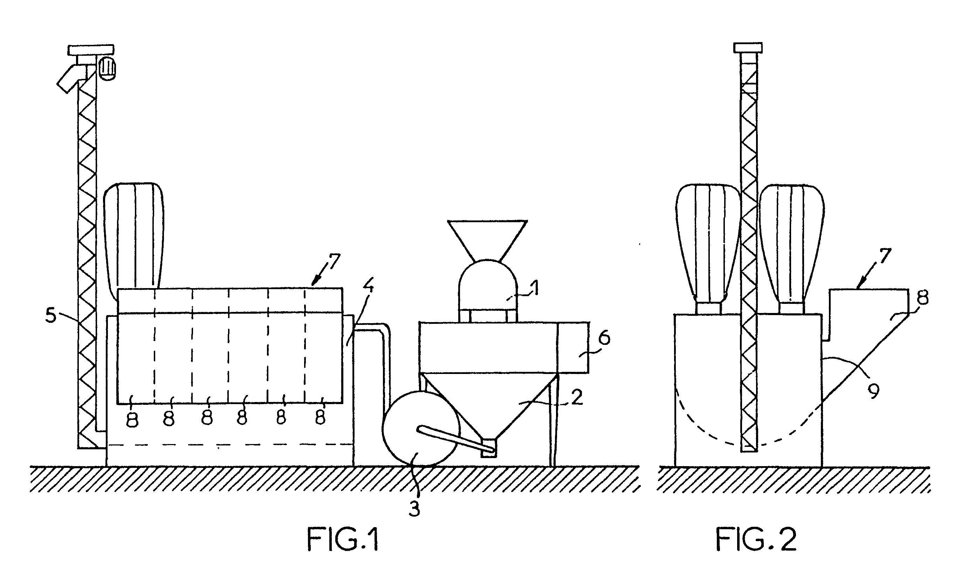

— La figure 1 est une vue de côté schématique d'une installation de fabrication d'aliment pour bétail;

— La figure 2 représente l'installation de la figure 1, vue en bout;

— La figure 3 est une coupe transversale schématique partielle du mélangeur utilisé dans l'installation de la figure 1;

— La figure 4 est une perspective partielle permettant d'illustrer le montage des trappes équipant les cases utilisées pour le dosage de le matière additive;

— La figure 5 est une coupe transversale schématique du montage représenté figure 4.

L'installation représentée sur ces dessins fait tout d'abord intervenir une bascule de circuit 1 pour le pesage des matières premières (produit nitrifs) qui peuvent par exemple consister en des grains amenés par une ou plusieurs vis sans fin (non représentées).

Cette bascule 1 se trouve disposée au-dessus d'une trémie 2 qui recueille la quantité de grain nécessaire pour un cycle de fabrication.

Cette trémie 2 est reliée à un broyeur 3 dont la sortie est connectée à l'entrée principale d'un mélangeur horizontal 4 dont la sortie est raccordée à une vis sans fin 5 permettant l'extraction et le stockage de l'aliment prêt à l'utilisation.

Tous ces éléments (bascule 1, trémie 2, vis sans fin 5, broyeur 3 et melangeur 4) peuvent consister en des matériels classiques disponibles dans le commerce. En conséquence, ils ne seront pas décrits en détail.

Toutefois, la particularité de l'installation selon l'invention consiste en ce qu'elle comprend en outre;

— d'une part, un automatisme logé par exemple dans un coffret 6 monté sur la trémie 2 et qui effectue la commande séquentielle des susdits éléments de mainère à obtenir une fabrication de la quantité nécessaire par lots et de façon répétitive et automatique, et

— d'autre part, un doseur de matière additive 7, par exemple de CMV, qui comporte une série de cases 8 montées sur l'une des parois latérales 9 du mélangeur 4 et dans chacune desquelles on peut disposer, au préalable, la quantité de matière additive nécessaire à chaque cycle.

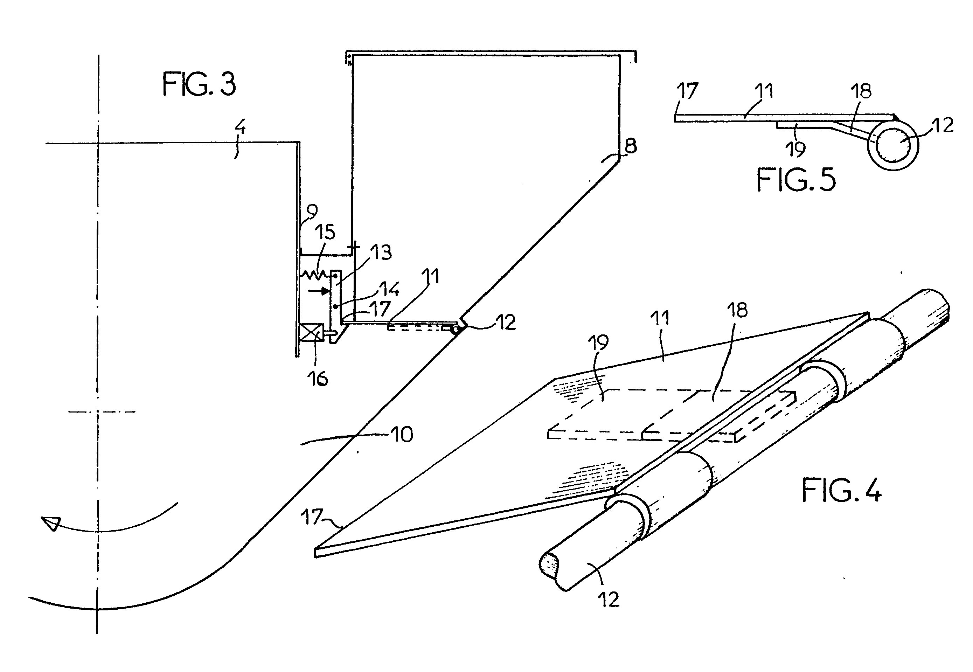

Comme représenté sur les figures 3, 4 et 5, chacune des ces cases 8 communique avec le volume interne du mélangeur 4 (passage 10) par l'intermédiaire d'une trappe 11 montée basculante autour d'un axe horizontal 12, cette trappe 11 constituant, en positon fermée le fond de la case 8.

Cette trappe 11 coopère, du côté opposé à l'axe 12, avec un dispositif de verrouillage comportant un mentonnet oscillant 13 rappelé d'un côté de l'axe de pivotement 14 par un ressort 15 et sollicité, de l'autre côté par un électro-aimant 16.

Ce dispositif de verrouillage fonctionne d'une façon analogue à celle d'un loquet à chlenche fixe et à mentonnet basculant, la bordure 17 de la trappe 11 située du côte opposé à l'axe 12 faisant alors office de la clenche.

Il est clair que le verrouillage s'obtient en faisant basculaer la trappe 11 vers le haut jusqu'à l'amener en position de fermeture. Dans la dernière phase de ce basculement, le mentonnet 13 s'efface pour laisser passer la trappe 11 puis revient à sa positon initiale pour retenir la bordure 17. La trappe 11 se trouve alors en position fermée.

Le déverrouillage de la trappe 11 s'obtient ensuite grâce à l'électro-aimant 16 qui, lorsqu'il est alimenté, provoque l'effacement du mentionnet 13. La trappe 11 se trouve alors libérée et bascule par gravité, ouvrant ainsi la case 8.

Bien entendu chacune des cases 8 comprend sa propre trappe 11 équipée de son propre dispositif de verrouillage commandable individuellement. Ainsi, lors d'une opération complète de fabrication d'aliment les cases 8 seront ouvertes les unes après les autres, à raison d'une case par lot. En fin de cycle, on aura autant de cases ouvertes 8 que de lots de matière traitée.

Il conviendra ensuite de refermer toutes ces cases 8 en vue d'une utilisation ultérieure. Pour faciliter cette opération l'invention propose de monter basculantes toutes le trappes sur un arbre commun 12, lui-même monté rotatif.

Cet arbre 12 comprend au niveau de chacune des trapes 11, une butée en saillie 18 éventuellement prolongée par une lame de ressort 19.

Ainsi, en faisant pivoter convenablement l'arbre 12 par exemple à l'aide d'une manivelle, on provoque le basculement vers le haut et le verrouillage en position fermée de toutes les trappes 11 qui se trouvaient en position ouverte. Une fois cette fermeture effectuée, et l'action sur la mainivelle interrompue, l'arbre 12 qui se trouve libéré, retourne à sa position initiale et ne fait plus obstacle à une nouvelle ouverture automatique des trappes 11.

Le déroulement d'un cycle de fabrication à l'aide de l'appareillage précédemment décrit peut s'effectuer comme suit:

Dans la journée l'utilisateur programmera la quantité de chaque matière première, qui pourra être acheminée par autant de vis sans fin que de produits dans la bascule 1, puis le nombre de cycles, puis l'heure de démarrage. Il aura en outre pesé et rempli de matière additive autant de cases 8 que de lots prévu dans le cycle.

A l'heure prévue, l'installation se mettra en marche et l'on aura:

— L'ouverture d'une case 8.

— L'arrivée successive dans la trémie à céréales 2 de chaque produit par le ou les vis et par la bascule 1.

— La mise en route du broyeur 3 jusqu'à la vidange intégrale de la trémie à céréale 2.

— La mise en route du mélangeur 4 pendant un temps de mélange prévu.

— L'évacuation du produit fini, et,

— Le départ éventuel d'un autre cycle.

A titre d'exemple, pour un mélangeur 4 de 1000 l de six cases 8, ou pourra réaliser 6000 l dans la nuit (soit environ 3000 kg) ou pour un mélangeur 4 de 2000 l de cinq cases 8 on pourra réaliser 10000 l (soit environ 5000 kg).

**Revendications**

1. Appareillage destiné à la fabrication d'aliments pour bétail, comprenant:

— Un mélangeur d'un type connu en soi;

— Des moyens d'alimentation (1, 2) permettant d'introduire à l'intérieur du mélangeur après passage dans un broyeur (3) des quantités déterminées des produits de base de l'aliment;

— Des moyens d'extraction (5) permettant l'évacuation du produit fini à la sortie du mélangeur;

— Un autmatisme (6) pour la commande du mélangeur (4) ainsi que des moyens d'alimentation (1, 2, 3), cet. automatisme étant conçu de mainère à pouvoir piloter un nombre prédéterminé de cycles de fabrication consécutifs, et

— Un doseur (7) de produit comprenant une sére de cases (8) ayant des orifices de sortie (10), chacun équipé l'un obturateur (11) commandé individuellement par ledit automatisme cet appareillage, étant caractérisé en ce que les moyens d'alimentation (1, 2) sont conformés pour introduire des céreales broyès, tandis que la série de cases (8), dans chacune desquelles on peut disposer préalablement une quantité de matière additive telle que du complement minéral vitamine (CMV) nécessaire à chaque cycle, est disposée de telle façon que chacune de ces cases (8) attenante au melangeux, a son orifice de sortie (10) qui débouche directement dans le mélangeur (4).

2. Appareillage selon la revendication 1, caractérisé en ce que les sudites cases (8) sont disposées le long d'au moins l'une des parois (9) du mélangeur et en ce que chaque case (8) communique dans sa partie inférieure, avec le volume intérieur du mélangeur (4) par l'intermédiaire d'une trappe (11) dont l'ouverture est commandée par un système de verrouillage comportant un électro-aimant (16) ou analogue connecté au susdit automatisme.

3. Appareillage selon l'une des revendications précédentes, caractérisé en ce que la susdite trappe (11) est montée basculante autour d'un axe horizontal (12) et coopère, du côté opposé à l'axe (12) avec un dispositif de verrouillage du type loquet à clenche fixe et à mentonnet oscillant (13).

4. Appareillage selon la revendication 3, caractérisé en ce que le susdit mentonnet (13) est sollicité d'un côté de son axe de pivotement (12) par un ressort (15), et, de l'autre côté, par un électro-aimant (16) connecté au susdit automatisme.

5. Appareillage selon l'une des revendications précédentes, caractérisé en ce que les susdites trappes (11) sont montée basculantes sur un arbre commun (12) lui-même monté rotatif, et en ce que cet arbre (12) comprend, au niveau de chacune des trappes (11) une butée en saillie (18) éventuellement prolongée par une lame de ressort (19), et en ce que la rotation de l'arbre (12) est commandée par un organe d'entraînement tel que, par exemple une manivelle.

**Patentansprüche**

1. Vorrichtung zur Bereitung von Tierfutter mit einem Mischer (4) eines an sich bekannten Typs, einer Zuführvorrichtung (1, 2) zum Einbringen vorbestimmter Mengen von Grundstoffen des Futtermittels in das Innere des Mischers nach Durchlaufen eines Zerkleinerers (3), einer Entnahmevorrichtung (5) zum Entnehmen des Endprodukts am Ausgang des Mischers, einer automatischen Vorrichtung (6) zum Steuern des Mischers (4) und der Zuführvorrichtung (1, 2, 3), wobei die automatische Vorrichtung so ausgebildet ist, daß sie eine vorbestimmte Zahl aufeinanderfolgender Bereitungsabläufe steuern kann, und einer Stoff-Dosiervorrichtung (7) mit einer Reihe von Fächern (8), die Austrittsöffnungen (10) aufweisen, von denen jede mit einer von der automatischen Vorrichtung einzeln gesteuerten Schließvorrichtung (11) versehen ist, dadurch gekennzeichnet, daß die Zuführvorrichtung (1, 2) zum Einbringen zermahlenen Getreides ausgebildet ist, während die Reihe von Fächern (8), in die zuvor einer bei jedem Bereitungsablauf erforderliche Menge Zusatzstoff, wie etwa vitaminierter Mineralzusatzstoff (CMV), eingebracht werden kann, derart vorgesehen ist, daß jedes dieser an den Mischer angrenzenden Fächer (8) mit seiner Austrittsöffnung (10) direkt in den Mischer (4) einmündet.

2. Vorrichtung nach Anspruch 1, dadurch gekennzeichnet, daß die Fächer (8) entlang mindestens einer der Wände (9) des Mischers angeordnet sind und daß jedes Fach (8) in seinem unteren Abschnitt mit dem Innenraum des Mischers (4) über eine Klappe (11) in Verbindung steht, deren Öffnung von einem Verriegelungssystem mit einem Elektromagneten (16) oder dergleichen, der mit der automatischen Vorrichtung verbunden ist, gesteuert wird.

3. Vorrichtung nach Anspruch 1 oder 2, dadurch gekennzeichnet, daß die Klappe (11) un eine horizontale Achse (12) kippbar augebracht ist und daß sie an der der Achse (12) entgegengesetzten Seite mit einer Verriegelungsvorrichtung vom Typ einer Fallklinke mit fester Falle und sich hin- und herbewegendem Schließhaken (13) zusammenwirkt.

4. Vorrichtung nach Anspruch 3, dadurch gekennzeichnet, daß die Riegelfalle (13) an einer Seite ihrer Drehachse (12) durch eine Feder (15) und an der anderen Seite durch einen mit der automatischen Vorrichtung verbundenen Elektromagneten (16) belastet ist.

5. Vorrichtung zur Bereitung von Tierfutter nach einem der Ansprüche 1 bis 4, dadurch gekennzeichnet, daß die Klappen (11) an einer gemeinsamen, ihrerseits drehbaren Welle (12) kippbar angebracht sind, daß diese Welle (12) in Höhe jeder dieser Klappen (11) einen eventuell durch ein Federblatt verlängerten ausladenden Anschlag (18) aufweist und daß die Drehung der Welle (12) durch ein Antriebselement, zum Beispiel eine Kurbel, gesteuert wird.

**Claims**

1. An apparatus adapted for the preparation of feedstuffs for livestock, comprising;
    a mixer (4) of a type known per se;
    supply means (1, 2) allowing predetermined quantities of base products of the feedstuff to be introduced to the interior of the mixer after having passed through a grinder (3);
    extraction means (5) allowing the finished product to be evacuated from the outlet of the mixer;
    an automatic control system (6) for controlling the mixer (4) and the supply means (1, 2, 3), this automatic control system being so arranged as to be able to command a predetermined number of consecutive cycles of preparation, and
    a doser (7) for a product, comprising a series of bins or hoppers (8) having outlet openings (10), each provided with an obturating means (11) individually controlled by the said automatic control system, this apparatus being characterised in that the supply means (1, 2) are so arranged as to introduce ground cereals, while the series of hoppers (8), into each of which a quantity of additive material such as vitaminised mineral complement (CMV) necessary for each cycle may be loaded at will, is disposed in such a way that each of these hoppers (8), associated with the mixer, has its own outlet opening (10) which opens directly into the mixer (4).

2. An apparatus according to claim 1, characterised in that the above mentioned hoppers (8) are disposed along at least one of the walls (9) of the mixer, and in that each hopper (8) communicates in its lower part with the interior of the mixer (4) through a hopper door (11), the opening of which is controlled by a latching device including an electro-magnet (16) or the like connected to the above mentioned automatic control system.

3. An apparatus according to either one of the preceding claims, characterised in that the above mentioned hopper door (11) is pivotally mounted about a horizontal axis (12) and cooperates, on the side opposite to the axis (12), with a latching device of the fixed latch lock type with a swinging catch (13).

4. An apparatus according to claim 3, characterised in that the above mentioned catch (13) is biassed on one side of its pivot axis (14) by means of a spring (15), and on the other side thereof, by an electromagnet (16) connected to the said automatic control system.

5. An apparatus according to any one of the preceding claims, characterised in that the above mentioned hopper doors (11) are pivotally mounted on a common shaft (12) which is itself rotatably mounted, and in that this shaft (12) comprises, at the level of each of the hopper doors (11), a projecting finger (18) which is extended by a leaf spring (19), and in that rotation of the shaft (12) is controlled by an actuating member such as, for example, a crank handle.

FIG.2

FIG.1

FIG. 3

FIG. 5

FIG. 4

4

8

9

15

13

14

11

17

16

12

10

17

17

11

18

12

19

19

11

18

12

EP 0 108 007 B1